# EUROPÄISCHE PATENTSCHRIFT

(11) **EP 1 468 320 B1**
(45) Veröffentlichungstag und Bekanntmachung des Hinweises auf die Patenterteilung: **11.10.2006**
(21) Anmeldenummer: 03729469.1
(22) Anmeldetag: 16.01.2003
(51) Int. Cl.: G02B 7/18, B23K 26/42, H01S 3/04

(54) **GEKÜHLTER SPIEGEL FÜR EINEN LASERSTRAHL**
COOLED MIRROR FOR A LASER BEAM
MIROIR A REFROIDISSEMENT POUR UN FAISCEAU LASER

(30) Priorität: 16.01.2002 DE 10201334
(43) Veröffentlichungstag der Anmeldung: 20.10.2004
(73) Patentinhaber: Rofin-Sinar Laser GmbH, 22113 Hamburg (DE)
(72) Erfinder: ARMIER, Karl-Heinz, 22175 Hamburg (DE); KÖPKE, Klaus, 21039 Escheburg (DE); PETERS, Jürgen, 20535 Hamburg (DE)
(74) Vertreter: Mörtel & Höfner
(86) Internationale Anmeldenummer: PCT/EP2003/000396
(87) Internationale Veröffentlichungsnummer: WO 2003/060586

(56) Entgegenhaltungen:
- US-A- 3 884 558
- US-A- 3 909 118
- US-A- 4 253 739
- US-A- 4 895 436
- US-A- 5 751 750
- ANTHONY F M: "HIGH HEAT LOAD OPTICS: AN HISTORICAL OVERVIEW" OPTICAL ENGINEERING, SOC. OF PHOTO-OPTICAL INSTRUMENTATION ENGINEERS. BELLINGHAM, US, Bd. 34, Nr. 2, 1. Februar 1995 (1995-02-01), Seiten 313-320, XP000490719 ISSN: 0091-3286

## Beschreibung

Die Erfindung bezieht sich auf einen Spiegel für einen Laserstrahl hoher Leistungsdichte.

Spiegel, die zur Führung oder zur Formung eines Hochleistungslaserstrahls verwendet werden, sind aufgrund der hohen Leistungsdichte im Laserstrahl und der unvermeidbaren Absorption eines Teils der auftreffenden Leistung thermisch hoch belastet. Dies führt einerseits zu einer lokalen Aufheizung des Spiegels, die im Laufe des Betriebs eine Beschädigung der reflektiven Beschichtung zur Folge haben kann. Andererseits entstehen durch den einseitigen Wärmeeintrag innerhalb des Spiegels große Temperaturgradienten, die zu einer Verformung der Spiegelfläche und damit zu einer unerwünschten Veränderung der Eigenschaften des Laserstrahls, d.h. seines Profils (Form) und seiner Ausbreitungsrichtung führen.

Um eine solche Verformung zu vermeiden, ist es grundsätzlich bekannt, die entsprechenden Spiegel mit Hilfe eines Fluids zu kühlen. In vielen Anwendungsfällen reicht jedoch eine einfache Kühlung des Spiegels nicht aus, um Verformungen auf ein vertretbares Ausmaß zu reduzieren. Vielmehr ist auch neben einer Kühlung der Spiegelfläche eine gleichzeitige Beheizung der der Spiegelfläche abgewandten Rückseite des Spiegels erforderlich, um thermisch induzierte Verformungen zu vermeiden. Ein solcher Spiegel ist beispielsweise aus dem US-Patent 4,253,739 bekannt, bei dem das im Bereich der Spiegelfläche erwärmte Kühlfluid an die Rückwand des Spiegels geführt wird, um diese zu beheizen und auf diese Weise thermisch induzierte Verformungen der Spiegelfläche zu kompensieren. Das Kühlfluid wird hierzu seitlich in den Spiegelkörper eingeleitet, strömt unterhalb der Spiegelplatte zum gegenüberliegenden Rand des Spiegels, wird dort zur Rückwand geführt und strömt in entgegengesetzter Richtung zurück zum Auslass der sich ebenfalls am seitlichen Rand des Spiegels befindet. Eine ungleichmäßige Aufheizung der Spiegelfläche und damit deren Verformung kann jedoch auf diese Weise nicht verhindert werden.

Thermisch verursachte Verformungen sind insbesondere bei Spiegeln unerwünscht, die als Resonatorspiegel verwendet werden. Dort sind Verformungen besonders nachteilig, da sich die damit einhergehende Verschlechterung der optischen Eigenschaften des Resonators besonders empfindlich auf die Eigenschaften des aus dem Resonator austretenden Laserstrahles auswirkt. Dies ist insbesondere bei ebenen diffusionsgekühlten Hochleistungs-CO₂₋Bandleiterlasern, wie sie beispielsweise aus der US-A-4,719,639 bekannt sind, aufgrund der großen Ausdehnung der Resonatorspiegel, die sich über die gesamte Breite der Elektroden erstrecken, ein Problem. Bei den bekannten Bandleiterlasern werden deshalb ausschließlich Spiegel eingesetzt, bei denen der Wärmeeintrag durch möglichst hochreflektierende Oberflächen minimiert wird. Die Herstellung solcher Oberflächen ist jedoch in der Regel aufwendig. Außerdem verlieren sie im Betrieb durch mögliche Verschmutzung ihre günstigen Reflexionseigenschaften.

In der DE 44 28 194 C2 ist deshalb analog zu dem aus dem vorstehend zitierten US-Patent 4,253,739 bekannten Spiegel vorgeschlagen, die Resonatorspiegel eines Bandleiterlasers mit einer steuerbaren Wärmequelle, beispielsweise ein an seiner Rückseite angeordneter Heizleiter, thermisch zu koppeln, um eine durch den Laserstrahl hervorgerufene Verformung zu kompensieren. Im Hochleistungsbereich hat sich jedoch herausgestellt, dass eine solche Kompensation insbesondere bei einem Betrieb mit ausgeprägten Leistungswechseln nicht mehr ausreicht, thermische Verformungen zu vermeiden, da die erforderliche Heizleistung zu groß und die Steuerung zu träge wird.

Der Erfindung liegt nun die Aufgabe zugrunde, einen Spiegel für einen Laserstrahl anzugeben, bei dem eine durch den einseitigen Wärmeeintrag entstehende Verformung der Spiegelfläche auch ohne den Einsatz einer zusätzlichen Wärmequelle verringert ist.

Die genannte Aufgabe wird gemäß der Erfindung gelöst mit einem Spiegel mit den Merkmalen des Patentanspruches 1. Gemäß diesen Merkmalen ist im Inneren des Spiegels zur Kühlung eines vom Laserstrahl thermisch belasteten Bereiches, d h. eines Bereiches der der vom Laserstrahl beaufschlagten Fläche benachbart ist, zumindest ein erster Kühlkanal für ein Kühlfluid derart angeordnet, dass der Bereich wenigstens annähernd symmetrisch zu seiner Mitte gekühlt wird und das in diesem Bereich erwärmte Kühlfluid zur Kompensation thermisch verursachter Spannungen in thermisch unbelastete, d.h. vom Laserstrahl unbeaufschlagte Bereiche des Spiegels geführt ist.

Da das erwärmte Kühlfluid in Bereiche des Spiegels geführt wird, die durch den Laserstrahl nicht unmittelbar aufgeheizt werden (thermisch unbelastet sind), und dort einen Teil der aufgenommenen Wärmemenge abgibt, können bei zugleich effizienter Kühlung des Spiegels eine Verformung der Spiegelfläche, d.h. deren Abweichung von der Sollgeometrie verursachende Temperaturgradienten innerhalb des Spiegels deutlich verringert werden, ohne dass es einer separaten Heizquelle bedarf. Die Erfindung beruht somit auf der Idee, anstelle einer separaten Heizquelle das in thermisch belasteten Bereichen des Spiegels erwärmte Kühlfluid selbst als Heizquelle zu verwenden. Das durch die Aufheizung des thermisch belasteten Bereiches erwärmte Kühlfluid dient somit zum Beheizen der Bereiche des Spiegels, die thermisch unbelastet sind und in Zonen liegen, die bei vorhandenem Temperaturgradienten zu einer unerwünschten Verformung führen würden. Die im Einzelfall zweckmäßige Führung des Kühlkanals in thermisch unbelastete Bereiche und dessen konstruktive Auslegung hängen dabei wesentlich von der konkreten Gestaltung des Spiegelkörpers sowie von der Lage und der geometrischen Form des vom Laserstrahl beaufschlagten Teils der Spiegelfläche ab.

Da außerdem die vom Kühlfluid aufgenommene Wärmemenge und damit auch die an der Rückseite des Spiegels vom Kühlfluid abgegebene Wärmemenge unmittelbar von dem durch den Laserstrahl verursachten Wärmeeintrag bestimmt ist, erfolgt zwangsläufig und ohne die Notwendigkeit einer externen Steuerung eine Anpassung der zur Vermeidung von unzulässigen Temperaturgradienten erforderlichen Erwärmung dieser thermisch unbelasteten Bereiche des Spiegels an die jeweiligen Betriebsbedingungen des Lasers.

Der erste Kühlkanal ist außerdem derart angeordnet, dass eine wenigstens annähernd mittensymmetrische Kühlung des thermisch belasteten Bereichs erfolgt. Dies hat eine formtreue Ausdehnung der Spiegelfläche zur Folge, so dass eine Änderung der optischen Eigenschaften des Spiegels weitgehend vermieden ist.

Der Kühlkanal enthält einen benachbart zur Spiegelfläche des Spiegels angeordneten innenliegenden ersten Kanalabschnitt, dem in Strömungsrichtung des Kühlfluids ein innenliegender zweiter Kanalabschnitt nachgeordnet ist, der benachbart zur Rückwand angeordnet ist. Da das erwärmte Kühlfluid zur Rückwand des Spiegels geführt wird und dort einen Teil der aufgenommenen Wärmemenge abgibt, wird bei zugleich effizienter Kühlung des Spiegels der im wesentlichen für eine Verformung der Spiegeloberfläche verantwortliche Temperaturgradient zwischen Spiegelfläche und Rückwand deutlich verringert.

Der Spiegel ist mit zumindest einem Zufuhrkanal und zumindest einem Auslasskanal für das Kühlfluid versehen, die an den ersten bzw. zweiten Kanalabschnitt derart angeschlossen sind dass das Kühlfluid im ersten bzw. zweiten Kanalabschnitt in zumindest zwei von der Mitte zum Rand bzw. vom Rand zur Mitte fließende Teilströme aufgeteilt wird. Dadurch wird eine symmetrische Kühlung des Spiegels bewirkt und die thermischen Verformungen sind weiter verringert.

Vorzugsweise kommunizieren der erste und zweite Kanalabschnitt über wenigstens einen innenliegenden seitlichen Verbindungskanal miteinander. Dies ermöglicht eine besonders effiziente Ausnutzung der in das Kühlfluid eingebrachten Wärmemenge und führt zu einer besonders homogenen Temperaturverteilung im Spiegel.

Insbesondere verlaufen erster und zweiter Kanalabschnitt im wesentlichen parallel zur Spiegelfläche bzw. zur Rückwand. Da sich die Kanalabschnitte weitgehend an die Kontur der Spiegelfläche bzw. der Rückwand anschmiegen, ist eine asymmetrische thermische Belastung weitgehend vermieden und thermisch induzierte Verbiegungen sind zusätzlich verringert.

In einer weiteren vorteilhaften Ausführungsform sind erster und zweiter Kanalabschnitt bezüglich einer in der Mitte des Spiegels annähernd parallel zur Spiegelfläche verlaufenden Mittenebene zumindest auf einem wesentlichen Teil ihrer Länge annähernd spiegelsymmetrisch zueinander angeordnet. Durch die spiegelsymmetrische Anordnung der ersten und zweiten Kanalabschnitte wird eine gleichmäßige Kühlung des Spiegels in seinem gesamten Volumen ermöglicht und das Auftreten thermischer Spannungen weitgehend reduziert.

In einer weiteren besonders vorteilhaften Ausgestaltung der Erfindung ist der erste Kanalabschnitt an eine Mehrzahl von symmetrisch angeordneten Zufuhrkanälen angeschlossen. Dadurch wird frisches Kühlwasser an eine Mehrzahl von Stellen an den thermisch belasteten Bereich herangeführt und die Temperatur des Spiegels über seine gesamte Fläche vergleichmäßigt.

In einer weiteren bevorzugten Ausführungsform ist auch der zweite Kanalabschnitt einer Mehrzahl von Auslasskanälen angeschlossen, so dass auch in dem vom zweiten Kanalabschnitt erwärmten Bereich eine Vergleichmäßigung der Temperatur bewirkt wird.

Vorzugsweise ist ein mit dem ersten Kühlkanal im wesentlichen baugleicher zweiter Kühlkanal vorgesehen, wobei der erste und zweite Kühlkanal spiegelsymmetrisch zu einer senkrecht zur Mittenebene verlaufenden Symmetrieebene eines auf die Spiegelfläche auftreffenden Laserstrahls angeordnet sind. Dadurch wird die verfügbare Wärmetauscherfläche erhöht und damit die Effizienz der Kühlung verbessert. In dieser Ausführungsform ist der Spiegel insbesondere für Laserstrahlen geeignet, die ein langgestrecktes rechteckiges Profil, d.h. eine große Ausdehnung in einer Achse quer zur Strahlachse und eine kleine Ausdehnung senkrecht dazu aufweisen. Der entsprechende Spiegel hat dann ebenfalls eine annähernd rechteckige Geometrie, d.h. große Querausdehnung und geringe Höhe. Außerdem ist insbesondere in Anwendungsfällen, bei denen der Laserstrahl sehr schmal ist, wie es für einen Laserstrahl der Fall ist, der aus dem schmalen Entladungsraum eines Bandleiterlasers zum Resonatorspiegel hin austritt, sichergestellt, dass der Mittenbereich des Spiegels zwischen den Kanalabschnitten, d.h. ein Bereich, der sich nur wenige mm über beide Seiten der Symmetrieebene hinaus erstreckt, gleichmäßig gekühlt wird, so dass geringfügige Dejustierungen (Mittenebene des Laserstrahls # Symmetrieebene des Spiegels) nicht zu einer störenden Verformung des Spiegels führen. Darüber hinaus ist es durch die Aufteilung in zwei voneinander beabstandete Kühlkanäle möglich, die der Spiegelfläche jeweils benachbarten ersten Kanalabschnitte möglichst nahe an die Oberfläche heranzuführen, da zwischen den ersten Kanalabschnitten ein Steg verbleibt, der die Spiegelfläche stützt. Die Anzahl der Kühlkanäle ist dabei nicht auf zwei beschränkt. Vielmehr können auch mehr als zwei symmetrisch angeordnete Kühlkanäle vorgesehen sein.

In einer bevorzugten Ausführungsform umfasst der Spiegel eine Basisplatte und eine Deckplatte, zwischen denen eine die Spiegelfläche und den oder die Kühlkanäle enthaltende Reflektorplatte angeordnet ist. Durch diesen Sandwich-Aufbau können die Kühlkanäle in die Reflektorplatte auf beiden Flachseiten eingefräst werden, so dass Formgebung und Verlauf der Kühlkanäle fertigungstechnisch einfach an die jeweiligen Anforderungen angepasst werden können.

Ein Spiegel gemäß der Erfindung ist besonders zur Verwendung als Resonatorspiegel eines Bandleiterlasers, insbesondere eines CO₂-Hochleistungs-Bandleiterlasers geeignet.

Zur weiteren Erläuterung der Erfindung wird auf die Ausführungsbeispiele der Zeichnung verwiesen. Es zeigen:
Figur 1 eine perspektivische Draufsicht auf einen erfindungsgemäßen Spiegel in einer schematischen Prinzipdarstellung,
Figur 2 eine Draufsicht auf den Spiegel,
Figur 3 eine konstruktive Ausgestaltung eines als Resonatorspiegel für einen Bandleiterlaser vorgesehenen erfindungsgemäßen Spiegels in einer Draufsicht auf die Spiegelfläche,
Figur 4 eine Draufsicht auf den Spiegel gemäß Figur 3 senkrecht zur Ausbreitungsebene des Laserstrahles,
Figur 5 einen Querschnitt des Spiegels entlang der in Figur 3 eingetragenen Schnittlinie V-V,
Figur 6 eine weitere besonders vorteilhafte Ausführungsform eines Resonatorspiegels für einen Bandleiterlaser,
Figuren 7 und 8 eine Draufsicht bzw. Seitenansicht auf einen Bandleiterlaser mit einem Resonatorspiegel gemäß der Erfindung in einer schematischen Prinzipdarstellung.

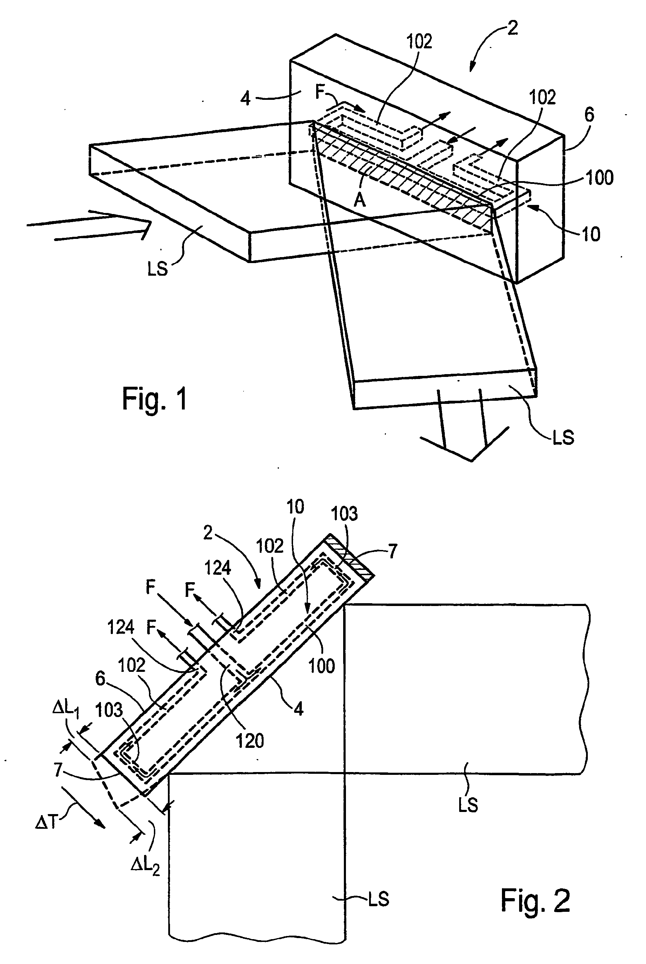

Gemäß Figur 1 trifft ein Laserstrahl LS auf einen Spiegel 2 und wird von diesem reflektiert. Im Ausführungsbeispiel ist ein Laserstrahl LS mit rechteckigem Strahlprofil und ein Spiegel 2 mit ebener Spiegelfläche 4 dargestellt. Der Laserstrahl LS beleuchtet eine durch Schraffur hervorgehobene Fläche A, an der aufgrund der hohen Intensität und der unvermeidlichen teilweisen Absorption des Laserstrahls LS Wärme in den Spiegel 2 eingebracht wird und deren Umgebung der Spiegel thermisch belastet ist (thermisch belasteter Bereich).

Im Spiegel 2 verläuft ein gestrichelt dargestellter erster Kühlkanal 10, der von einem Kühlfluid F durchströmt ist. Der Kühlkanal 10 umfasst einen innenliegenden ersten Kanalabschnitt 100, der benachbart zur Spiegelfläche 4 verläuft, dem in Strömungsrichtung des Kühlfluids F ein innenliegender zweiter Kanalabschnitt 102 nachgeordnet ist, der entlang der Rückwand 6 des Spiegels 2 geführt ist.

Ohne Erwärmung der der Spiegelfläche 4 gegenüberliegenden Rückwand 6 des Spiegels 2 würde sich ein Temperaturgradient zwischen Spiegelfläche 4 und Rückwand 6 aufbauen, der zu einer Verbiegung der Spiegelfläche 4 führen würde.

Dies ist in Figur 2 veranschaulicht. Durch einen einseitigen Wärmeeintrag und den dadurch verursachten Temperaturgradienten ΔT würde die Längenausdehnung ΔL₁ der Rückwand 6 geringer ausfallen als die Längenausdehnung ΔL₂ der Spiegelfläche 4, wie dies in der Figur gestrichelt dargestellt ist. Diese Unterschiede würden sich dann in einer Krümmung der Spiegelfläche 4 bemerkbar machen.

Ein solcher Temperaturgradient wird nun gemäß der Erfindung dadurch vermieden, dass das im ersten Kanalabschnitt 100 erwärmte Kühlfluid F beim Durchströmen des zweiten Kanalabschnittes 102 die Rückseite 6 des Spiegels 2 in einem Ausmaß erwärmt der seiner Wärmeaufnahme und damit dem Leistungseintrag auf der Spiegelfläche 4 entspricht.

Die Zufuhr des Kühlfluids F erfolgt über einen Zufuhrkanal 120 etwa in der Mitte des Spiegels 2, die in der Regel mit der Mitte des auf ihn treffenden Laserstrahles LS zusammenfällt. Das kalte Kühlfluid F wird in zwei Teilströme aufgeteilt, die in unmittelbarer Nähe der Spiegelfläche 4 und parallel zu dieser und zueinander in entgegengesetzter Richtung nach außen zu den seitlichen Rändern 7 des Spiegels 2 strömen. Das Kühlfluid F führt die in den Spiegel 2 über die Fläche A eingetragene Wärme ab und heizt sich allmählich auf und entlang der Spiegelfläche ergibt sich ein Temperaturgefälle zur Mitte hin. Durch innenliegende und am seitlichen Rand 7 angeordnete Verbindungskanäle 103 wird das Kühlfluid F zum zweiten Kanalabschnitt 102 geführt, der entlang der Rückwand 6 verläuft. Das Kühlfluid F gibt dort einen Teil der aufgenommenen Wärmemenge ab, bevor es annähernd in der Spiegelmitte über Auslasskanäle 124 aus dem Spiegel 2 herausgeführt wird. Im Bereich der Rückwand 6 fließt dabei das Kühlfluid F entgegengesetzt zu seiner Strömungsrichtung im Bereich der Spiegelfläche 4. Dadurch heizt das erwärmte Kühlfluid F die Randzone der Rückwand 6 stärker auf als den Mittenbereich, so dass sich an der Rückwand 6 ebenso wie an der Spiegelfläche 4 zur Mitte hin ein Temperaturgefälle einstellt. Die Aufheizung der Rückwand 6 des Spiegels 2 mit annähernd gleicher Temperaturverteilung wie sie auch auf der Spiegelfläche 4 vorliegt, bewirkt, dass sich Spiegelfläche 4 und Rückwand 6 des Spiegels 2 unter Vermeidung innerer Spannungen in etwa gleichem Ausmaß ausdehnen und eine Verbiegung verhindert ist. Dies ist in der Figur durch den schraffierten Bereich am rechten Rand 7 des Spiegels 2 veranschaulicht.

Die anhand der Figuren 1 und 2 erläuterten Überlegungen sind dabei grundsätzlich auch auf andere Strahlprofile und gekrümmte, d. h. strahlformende Spiegelflächen anwendbar. Wesentlich ist, dass die Führung des Kühlfluids eine Homogenisierung der Temperaturverteilung bewirkt, indem die auf der beleuchteten Fläche eingebrachte Wärme vom Kühlmittel nicht nur abgeführt sondern durch entsprechende Gestaltung des Kühlkanals dazu benutzt wird, nicht vom Laserstrahl beaufschlagte Volumenbereiche des Spiegels zu erwärmen.

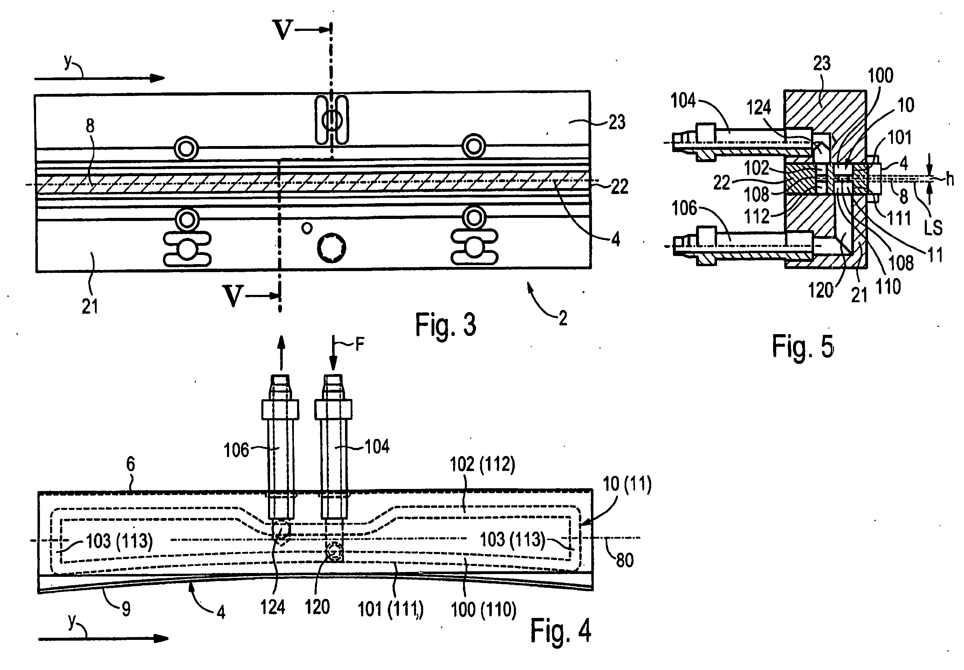

Gemäß Figur 3 ist der Spiegel 2 ein Resonatorspiegel eines CO₂₋Bandleiterlasers und in sandwichartiger Bauweise aus einer Basisplatte 21, einer Reflektorplatte 22 und einer Deckplatte 23 zusammengesetzt, die vorzugsweise aus Kupfer Cu bestehen und miteinander verlötet sind. Die Reflektorplatte 22 trägt stirnseitig die schraffiert eingezeichnete konkav gekrümmte Spiegelfläche 4, die in der konkreten Ausführungsform ein Ausschnitt aus einem Rotationsparaboloid ist.

In der Reflektorplatte 22 sind spiegelsymmetrisch zu ihrer sich in ihrer Querrichtung y und senkrecht zur Spiegelfläche 4 erstreckenden Symmetrieebene 8 der erste und ein zweiter Kühlkanal 10 bzw.11 angeordnet, deren Verlauf in der Draufsicht gemäß Figur 4 (Zeichenebene parallel zur Symmetrieebene 8) gestrichelt eingezeichnet ist. Der erste Kühlkanal 10 umfasst den ersten Kanalabschnitt 100, der möglichst nahe an der Spiegelfläche 4 verläuft und sich nahezu über die gesamte Querausdehnung des Spiegels 2 erstreckt, so dass die gesamte und bei Betrieb in einem Bandleiterlaser vom Laserstrahl beaufschlagte und somit thermisch belastete Spiegelfläche 4 gekühlt wird.
Der zweite Kanalabschnitt 102 ist über die innenliegenden seitlichen Verbindungskanäle 103 an den ersten Kanalabschnitt 100 angeschlossen und verläuft im wesentlichen parallel zu der von der Spiegelfläche 4 abgewandten Rückwand 6 des Resonatorspiegels 6, so dass der erste Kühlkanal 10 ringförmig ist und sich weitgehend an die Außenkontur der Reflektorplatte 22 anschmiegt. Erster und zweiter Kanalabschnitt 100, 102 sind dabei bezüglich einer annähernd parallel zur Spiegelfläche 4 und senkrecht zur Zeichenebene verlaufenden Mittenebene 80 annähernd spiegelsymmetrisch zueinander angeordnet.

In der Draufsicht gemäß der Figur befindet sich unterhalb des ersten Kühlkanals 10 der baugleiche zweite Kühlkanal 11, mit entsprechend baugleichen Kanalabschnitten 110, 112 und Verbindungskanälen 113.

Zur effizienten und gleichmäßigen Kühlung der Spiegelfläche 4 verlaufen.die ersten Kanalabschnitte 100, 110 in Querrichtung y parallel zur Schnittlinie 9 der Spiegelfläche 4 mit der parallel zur Zeichenebene verlaufenden Symmetrieebene 8 des Spiegels 2, so dass die der Spiegelfläche 4 jeweils zugewandte Wandfläche 101,111 des Kanalabschnitts 100 bzw. 110 an deren Krümmung angepasst ist. Auf Grund der großen Krümmungsradien der Spiegelfläche 4, typische Werte in der Praxis sind in der Größenordnung von etwa 1 - 2m, brauchen die Wandflächen 101,111 in der dazu senkrechten Ebene nicht gekrümmt zu sein.

Der Spiegel 2 ist an seiner Rückwand mit Anschlussstutzen 104, 106 versehen, durch die das Kühlfuid F zu- bzw. abgeführt wird.

In der Schnittdarstellung gemäß Figur 5 ist zu erkennen, dass erster und zweiter Kühlkanal 10,11 in der Reflektorplatte 22 symmetrisch zur Symmetrieebene 8 angeordnet sind. Erster und zweiter Kühlkanal 10, 11 kommunizieren miteinander jeweils über einen senkrechten Verbindungskanal 108. Die senkrechten Verbindungskanäle 108 befinden sich unmittelbar über dem Einlasskanal 120 bzw. unter dem Auslasskanal 124.

Erster und zweiter Kühlkanal 10, 11 weisen eine im wesentlichen rechteckige Querschnittsform auf. Die Herstellung der Kühlkanäle 10, 11 ist dabei wegen des Sandwich-Aufbaus des Resonatorspiegels 8 fertigungstechnisch einfach, beispielsweise durch Fräsen auf beiden Flachseiten, realisierbar. Aufgrund des großen Krümmungsradius der Spiegelfläche 4 ist deren tatsächliche Krümmung in der Zeichenebene der Figur 5 nicht mehr erkennbar. Da die Spiegelfläche 4 in der Zeichenebene nahezu plan ist, ist die ebene, der Spiegelfläche 4 zugewandte Wandfläche 101, 111 des ihr jeweils benachbarten Kanalabschnitts 100 bzw. 110 stets parallel zur Spiegelfläche 4, so dass diese weitgehend gleichmäßig gekühlt wird und Spannungen vermieden sind.

Zwischen dem ersten Kühlkanal 10 und dem symmetrisch bezüglich der Symmetrieebene 8 angeordneten zweiten Kühlkanal 11 befindet sich ein sich auf beide Seiten der Symmetrieebene erstreckender massiver Mittenbereich der Reflektorplatte 22 und damit des Spiegels 2 (Durch die Lage der Schnittlinie V - V ist der Mittenbereich in der Figur nicht im Schnitt erkennbar).Dieser Mittenbereich bildet einen Steg, der auf die Spiegelfläche 4 stabilisierend wirkt. Die Führung des Kühlfluid F innerhalb der Reflektorplatte 22 mit zwei voneinander beabstandet und symmetrisch zur Symmetrieebene 8 angeordneten ersten Kanalabschnitten 100 bzw. 110 trägt somit wesentlich zur effektiven Kühlung der Spiegelfläche 4 bei. Dies ist insbesondere dann von Vorteil, wenn der Spiegel 2 als Resonatorspiegel eines Bandleiterlasers verwendet wird. Dann beträgt die Ausdehnung h des Laserstrahls LS senkrecht zur Querausdehnung nur wenige mm (typischerweise 1 bis 2 mm). Eine ungleichmäßige Kühlung der Spiegelfläche 4 hätte dann zur Folge, dass eventuelle Dejustierungen oder Schwankungen der Strahllage auf der Spiegelfläche 4 aufgrund der bei inhomogener Temperaturverteilung von der Strahllage abhängigen optischen Eigenschaften der Spiegelfläche 4 zu einer erheblichen Schwankung und damit Verschlechterung der Resonatoreigenschaften führen würden.

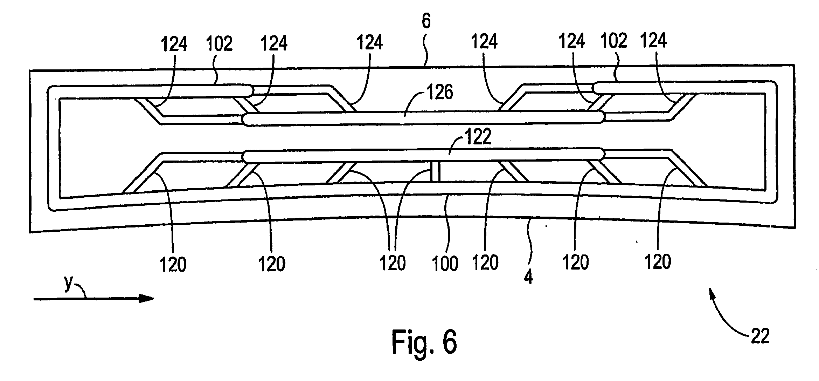

Im Ausführungsbeispiel gemäß Figur 6 ist der erste Kanalabschnitt 100 über eine Mehrzahl von Zufuhrkanälen 120 an einen zentralen Verteilerkanal 122 angeschlossen. Die Zufuhrkanäle 120 sind symmetrisch um die Mittenachse verteilt und speisen frisches Kühlfluid F an verschiedenen Stellen in den ersten Kanalabschnitt 100. Durch die Aufteilung des Kühlfluids in mehrere kalte Teilströme wird der Temperaturgradient in Querrichtung y entlang der Spiegelfläche 4 verringert. In gleicher Weise ist auch der zweite Kanalabschnitt 102 über eine Mehrzahl von Auslasskanälen 124 an einen zentralen Sammelkanal 126 angeschlossen, um auf der Rückseite ebenfalls eine Abflachung des Temperaturgradienten zu erzielen. Verteilerkanal 122 und Sammelkanal 126 liegen relativ nahe beisammen, so dass ein zusätzlicher Wärmeaustausch zwischen dem zuströmenden Kühlfluid und dem abströmenden Kühlfluid stattfindet, der zusätzlich zu einer Homogenisierung der Temperaturgradienten zwischen der Vorder- und der Rückseite der Reflektorplatte 22 beiträgt.

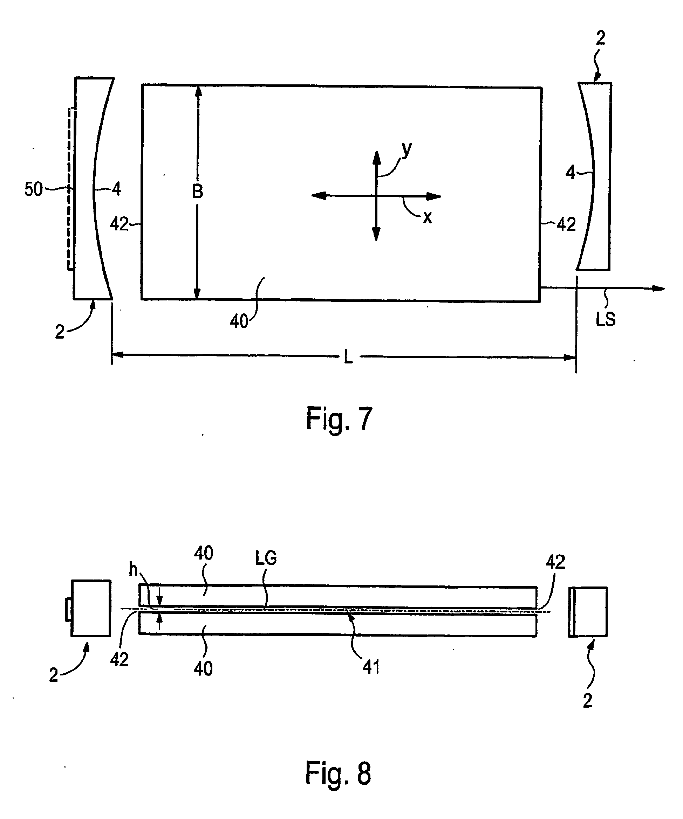

Gemäß Figuren 7 und 8 sind die Spiegel 2 als Resonatorspiegel eines CO₂-Bandleiterlaser verwendet. Ein solcher CO₂₋Bandleiterlaser enthält zwei flächenhaft ausgedehnte plattenförmige Elektroden 40, zwischen denen sich ein Lasergas LG befindet. Die Elektroden 40 legen einen schmalen, nur wenige Millimeter hohen und in Längs- und in Querrichtung x, y (typische Werte für einen Hochleistungslaser im kW-Bereich sind Höhe H = 1 - 2 mm, Länge L = 1 m, Breite B = 0,5 m) ausgedehnten Entladungsraum 41 fest, dem an jeder Stirnseite 42 als Resonatorspiegel der relativ schmale, in Querrichtung y ausgedehnte und vom Kühlfluid durchströmte Spiegel 2 zugeordnet ist. Im dargestellten Ausführungsbeispiel handelt es sich um einen instabilen Resonator des negativen Zweigs, dessen Spiegel 2 jeweils eine konkav gekrümmte Spiegelfläche 4 aufweisen. Einer der Spiegel 2, erstreckt sich nicht über die gesamte Breite B des Entladungsraumes 41, so dass an seinem Rand der im Resonator erzeugte Laserstrahl LS austreten kann, der in etwa eine der Stirnseite 42 entsprechende rechteckige Strahlform aufweist.

Einer der Resonatorspiegel, im Beispiel der Rückspiegel, kann außerdem auf seiner Rückseite mit einer gestrichelt eingezeichneten Wärmequelle 50 versehen sein, mit der gegebenenfalls auftretende thermische Restspannungen kompensiert werden können.

### Bezugszeichenliste

- 2: Spiegel
- 4: Spiegelfläche
- 6: Rückwand
- 7: Rand
- 8.: Symmetrieebene
- 10: erster Kühlkanal
- 11: zweiter Kühlkanal
- 40: Elektrode
- 41: Entladungsraum
- 42: Stirnseite
- 21: Basisplatte
- 22: Reflektorplatte
- 23: Deckplatte
- 50: Wärmequelle
- 80: Mittenebene
- 100: erster Kanalabschnitt
- 101, 111: Wandfläche
- 102: zweiter Kanalabschnitt
- 103: seitlicher Verbindungskanal
- 104,106: Anschlussstutzen
- 108: senkrechter Verbindungskanal
- 110,112,113: Kanalabschnitte
- 120: Zufuhrkanal
- 122: Verteilerkanal
- 124: Auslasskanal
- 126: Sammelkanal
- x: Längsrichtung
- y: Querrichtung
- h: Ausdehnung
- B: Breite
- L: Länge
- H: Höhe
- F: Kühlfluid
- LG: Lasergas
- LS: Laserstrahl

## Patentansprüche

1. Spiegel (2) mit einer schmalen und in einer Querrichtung (y) ausgedehnten Spiegelfläche (4) für einen Laserstrahl (LS) mit einem schmalen, rechteckigen Strahlprofil, in dem zumindest ein erster Kühlkanal (10) für ein Kühlfluid (F) angeordnet ist, der zum Abführen der, über die, Spiegelfläche (4) eingetragenen Wärme einen unmittelbar an dieser in Querrichtung verlaufenden und sich zumindest nahezu über deren gesamte Querausdehnung erstreckenden innenliegenden ersten Kanalabschnitt (10.0) sowie einen diesem in Strömungsrichtung des Kühlfluids (F) nachgeordneten zweiten Kanalabschnitt (102) aufweist, der zum Aufheizen einer der Spiegelfläche (4) gegenüberliegenden Rückwand (6) entlang dieser Rückwand geführt ist, wobei zumindest ein Zufuhrkanal (120) und zumindest ein Auslasskanal (124) für das Kühlfluid (F) an den ersten bzw. zweiten Kanalabschnitt (100 bzw. 102) derart angeschlossen sind, dass das Kühlfluid (F) im ersten bzw. weiten Kanalabschnitt (100, 102) in zumindest zwei von der Mitte des Spiegels zum, seitlichen Rand (7) bzw. vom seitlichen Rand (7) zur Mitte des Spiegels jeweils in zueinander entgegengesetzte Richtungen strömende Teilströme aufgeteilt wird.

2. Spiegel (2) nach Anspruch 1, bei dem der erste und zweite Kanalabschnitt (100, 102) über wenigstens einen innenliegenden seitlichen Verbindungskanal (103) miteinander kommunizieren.

3. Spiegel (2) nach einem der vorhergehenden Ansprüche, bei dem erster und zweiter Kanalabschnitt (100, 102) im wesentlichen parallel zur Spiegelfläche (4) bzw. Rückwand (6) verlaufen.

4. Spiegel (2) nach einem der vorhergehenden Ansprüche, bei dem erster und zweiter Kanalabschnitt (100, 102) bezüglich einer annähernd parallel zur Spiegelfläche (4) verlaufenden Mittenebene (80) des Spiegels (2) zumindest auf einem wesentlichen Teil ihrer Länge annähernd spiegelsymmetrisch zueinander angeordnet sind.

5. Spiegel (2) nach einem der vorhergehenden Ansprüche, bei dem der erste Kanalabschnitt (100) an eine Mehrzahl von symmetrisch angeordneten Zufuhrkanälen (120) angeschlossen ist.

6. Spiegel (2) nach Anspruch 5, bei dem der zweite Kanalabschnitt (102) an eine Mehrzahl von Auslasskanälen (124) angeschlossen ist.

7. Spiegel (2) nach einem der vorhergehenden Ansprüche, bei dem ein mit dem ersten Kühlkanal (10) im wesentlichen baugleicher zweiter Kühlkanal (11) vorgesehen ist und der erste und zweite Kühlkanal (10,11) spiegelsymmetrisch zu einer senkrecht zur Mittenebene (80) verlaufenden Symmetrieebene (8) angeordnet sind.

8. Spiegel (2) nach Anspruch 7, bei dem erster und zweiter Kühlkanal (10,11) miteinander jeweils über einen innenliegenden senkrechten Verbindungskanal (108) kommunizieren.

9. Spiegel (2), insbesondere Resonatorspiegel für einen Bandleiterlaser nach einem der vorhergehenden Ansprüche, mit einer Basisplatte (21) und einer Deckplatte (23), zwischen denen eine die Spiegelfläche (4) und den oder die Kühlkanäle (10,11) enthaltende Reflektorplatte (22) angeordnet ist.

10. Bandleiterlaser, insbesondere CO₂-Hochleistungs-Bandleiterlaser, bei dem sich ein Lasergas (LG) zwischen flächenhaft ausgedehnten Elektroden (40) befindet, die einen schmalen Entladungsraum (41) festlegen, dem an zumindest einer Stirnseite (42) als Resonatorspiegel ein Spiegel (2) gemäß einem der vorhergehenden Ansprüche zugeordnet ist.

## Claims

1. Mirror (2) having a narrow mirror surface (4) which extends in a lateral direction (y) for a laser beam (LS) having a narrow, rectangular beam profile, in which at least one first cooling passage (10) is arranged for a cooling fluid (F) and, in order to dissipate the heat that is introduced via the mirror surface (4), has an inner first passage section (100), which runs directly thereon in the lateral direction and extends at least approximately over its entire lateral extent, as well as a second passage section (102), which is arranged downstream from this in the flow direction of the cooling fluid (F) and is passed along a rear wall (6) which is opposite the mirror surface (4), in order to heat this rear wall, with at least one feed passage (120) and at least one outlet passage (124) for the cooling fluid (F) being connected to the first and second passage sections (100) and (102), respectively, in such a manner that the cooling fluid (F) is divided, in the first and second passage sections (100, 102), into at least two stream elements which flow from the centre of the mirror to the side edge (7) and from the side edge (7) to the centre of the mirror, respectively, in each case in opposite directions to one another.

2. Mirror (2) according to Claim 1, in which the first and second passage sections (100, 102) communicate with one another via at least one internal, lateral connecting passage (103).

3. Mirror (2) according to one of the preceding claims, in which the first and second passage sections (100, 102) run substantially parallel to the mirror surface (4) or rear wall (6), respectively.

4. Mirror (2) according to one of the preceding claims, in which the first and second passage sections (100, 102) are arranged approximately mirror-symmetrically with respect to one another, at least over a substantial part of their length, with respect to a centre plane (80), running approximately parallel to the mirror surface (4), of the mirror (2).

5. Mirror (2) according to one of the preceding claims, in which the first passage section (100) is connected to a plurality of symmetrically arranged feed passages (120).

6. Mirror (2) according to Claim 5, in which the second passage section (102) is connected to a plurality of outlet passages (124).

7. Mirror (2) according to one of the preceding claims, in which there is a second cooling passage (11), which is of substantially the same construction as the first cooling passage (10), and the first and second cooling passages (10, 11) are arranged mirror-symmetrically with respect to a plane of symmetry (8) running perpendicular to the centre plane (80).

8. Mirror (2) according to Claim 7, in which the first and second cooling passages (10, 11) each communicate with one another via an internal, perpendicular connecting passage (108).

9. Mirror (2), in particular a resonator mirror for a stripline laser according to one of the preceding claims, having a base plate (21) and a cover plate (23), between which there is a reflector plate (22) which includes the mirror surface (4) and the cooling passage(s) (10, 11).

10. Stripline laser, in particular a CO₂ high-power stripline laser, in which there is a laser gas (LG) between areally extending electrodes (40), which define a narrow discharge space (41) which, on at least one end side (42), is assigned a mirror (2) according to one of the preceding claims as resonator mirror.

## Revendications

1. Miroir (2) ayant une surface (4) de miroir étroite et s'étendant dans une direction (y) transversale pour un faisceau (LS) laser ayant un profil de faisceau rectangulaire étroit, miroir dans lequel est disposé au moins un premier canal (10) de refroidissement pour un fluide (F) de refroidissement qui, pour l'évacuation de la chaleur apportée par la surface (4) du miroir, a un premier tronçon (100) intérieur de canal s'étendant dans la direction transversale directement sur cette surface et s'étendant au moins presque sur toute son étendue transversale, ainsi qu'un deuxième tronçon (102) de canal en aval du premier tronçon, dans le sens d'écoulement du fluide (F) de refroidissement, qui passe pour le chauffage d'une paroi (6) arrière opposée à la surface (4) du miroir le long de cette paroi arrière, au moins un canal (120) d'entrée et au moins un canal (124) de sortie du fluide (F) de refroidissement étant raccordés au premier et au deuxième tronçon (100, 102) de canal de façon à ce que le fluide (F) de refroidissement dans le premier et dans le deuxième tronçon (100, 102) de canal soit subdivisé en au moins deux sous-courants allant du milieu du miroir au bord (7) latéral ou du bord (7) latéral au milieu du miroir, respectivement, dans des sens opposés.

2. Miroir (2) suivant la revendication 1, dans lequel le premier et le deuxième tronçon (100, 102) de canal communiquent entre eux par au moins un canal (103) latéral intérieur de communication.

3. Miroir (2) suivant l'une des revendications précédentes, dans lequel le premier et le deuxième tronçon (100, 102) de canal s'étendent sensiblement parallèlement à la surface (4) du miroir ou à la paroi (6) arrière.

4. Miroir (2) suivant l'une des revendications précédentes, dans lequel le premier et le deuxième tronçon (100, 102) de canal sont disposés sensiblement symétriquement l'un à l'autre comme en un miroir au moins sur une partie essentielle de leur longueur par rapport à un plan (80) médian du miroir (2) s'étendant à peu près parallèlement à la surface (4) du miroir.

5. Miroir (2) suivant l'une des revendications précédentes, dans lequel le premier tronçon (100) de canal est raccordé à une multiplicité de canaux (120) d'entrée disposés symétriquement.

6. Miroir (2) suivant la revendication 5, dans lequel le deuxième tronçon (102) de canal est raccordé à une multiplicité de canaux (124) de sortie.

7. Miroir (2) suivant l'une des revendications précédentes, dans lequel il est prévu un deuxième canal (11) de refroidissement, sensiblement de même construction que le premier canal (10) de refroidissement, et le premier et le deuxième canal (10, 11) de refroidissement sont disposés symétriquement comme en un miroir par rapport à un plan (8) de symétrie s'étendant perpendiculairement au plan (80) médian.

8. Miroir (2) suivant la revendication 7, dans lequel le premier et le deuxième canal (10, 11) de refroidissement communiquent entre eux, respectivement, par un canal (108) intérieur perpendiculaire de liaison.

9. Miroir (2), notamment miroir de résonateur pour un laser à conducteur à bande, suivant l'une des revendications précédentes comprenant une lame (21) de base et une lame (23) de finition entre lesquelles est disposée une lame (22) formant réflecteur contenant la surface (4) du miroir et le ou les canaux (10, 11) de refroidissement.

10. Laser à conducteur à ruban, notamment laser à conducteur à bande de grande puissance à CO₂, dans lequel un gaz (LG) laser se trouve entre des électrodes (40) qui s'étendent en surface et qui délimitent un espace (41) étroit de décharge auquel est associé sur au moins une face (42) frontal comme miroir de résonateur un miroir (2) suivant l'une des revendications précédentes.
